# EUROPEAN PATENT APPLICATION

(11) **EP 3 725 640 A1**
(43) Date of publication of application: **21.10.2020**
(21) Application number: 19169636.8
(22) Date of filing: 16.04.2019
(51) Int. Cl.: B61L 15/00, B61L 25/02, G01S 1/04

(54) **A METHOD FOR DETERMINING THE LOCATION OF A MOBILE UNIT LOCATED IN A TRAIN CARRIAGE**

(71) Applicant: Bombardier Transportation GmbH, 10785 Berlin (DE)
(72) Inventor:
(74) Representative: Alatis

(57) **Abstract**

A method for determining by a computer system the location of a mobile unit (110) located in a train carriage, the train carriage being provided with at least one first beacon (120) and at least one second beacon (130), both beacons being configured to communicate with said mobile unit by means of radiofrequency signals generated in accordance with one of the Bluetooth standard protocols.

## Description

### Field of the invention

The present invention pertains to the field of methods and systems for locating mobile units held by passengers within public transportation vehicles such as buses, trains, aircrafts or vessels. The invention concerns especially a method for determining the location of a mobile unit located in a train carriage provided with at least one first beacon and at least one second beacon, both beacons being configured to communicate with the mobile unit by means of radiofrequency signals generated in accordance with one of the Bluetooth standard protocols.

### Background of the invention

DE102106217331 discloses a system and a method for determining the presence of at least one passenger in a train carriage by means of cameras arranged in the carriage and held by the controllers. However, cameras to be used in public environments must be specifically designed to ensure a decent level of robustness in order to provide protection against degradations that may occur. Of course, this implies that the cost of such devices is not negligible, and, in the context of the prior art document, this aspect about costs is of crucial importance. Indeed, according to the prior art document, if one wants to determine not more than the presence of passengers, not even their locations, cameras would have to be deployed all over a fleet of transportation vehicles. The cost related to the deployment of the cameras would thus be significant. Therefore, despite the progress made so far in the field of cameras, the solution disclosed by this document is still too costly to be feasible.

### Summary of the invention

Accordingly, the goal of the invention is to remedy these disadvantages. Specifically, the goal of the invention is to provide a process and a system for accurately determining the location of passengers located in a train carriage that does not rely on the use of cameras.

These goals are achieved by a first object of the invention which concerns a method for determining the location of a mobile unit located in a train carriage, said train carriage being provided with at least one first beacon and at least one second beacon, both beacons being configured to communicate with said mobile unit by means of radiofrequency signals generated in accordance with one of the Bluetooth standard protocols, said method comprising the steps of:
- broadcasting, by said mobile unit, a pairing signal configured to trigger, upon receipt by said first and/or said second beacon, transmitting by said first and/or second beacon of an authentication signal that includes identification data of said first and/or, respectively, said second beacon,
- determining, by said mobile unit, a first power factor of a first signal transmitted by said first beacon and a second power factor of a second signal transmitted by said second beacon,
- analyzing, by said mobile unit, said first power factor and said second power factor in order to determine a closest beacon,
- transmitting, by said mobile unit, a third signal that includes identification data of said closest beacon, and
- retrieving, by a computer (101) which is remote from said mobile unit, location data that corresponds to said identification data of said closest beacon.

Thus, a mobile unit interacts with several beacons located in a train carriage to determine power factors that allow identification data of a closest beacon to be determined. The identification data is then transmitted to a remote computer which is able to determine a location of a beacon that corresponds to identification data that has been received. In doing so, the method allows the location of the mobile unit to be determined without relying on the use of cameras.

According to specific embodiments of the invention, said step of analyzing said first power factor and said second power factor may include a step of determining the highest power factor. Accordingly, establishing of the closest beacon may thus be limited to a step of comparing the power factors between themselves, thereby improving the speed at which the method according to the invention may be performed.

According to specific embodiments of the invention, the method may include a step of transmitting, by said mobile unit, to said computer, a fourth signal that includes identification data of a close beacon. Accordingly, the location of the mobile unit may be more accurately determined by making use more than two beacons.

According to specific embodiments of the invention, the method may include a step of receiving, by said mobile unit, a fifth signal that includes useful data selected by said computer. Accordingly, data that is relevant to the location of the mobile unit and that may thus be useful to the user in accordance to where it is located in the train may advantageously be transmitted by the remote computer and received by the mobile unit.

Another object of the invention concerns a system for determining the location of a mobile unit located in a train carriage, said train carriage being provided with at least one first beacon and at least one second beacon, both beacons being configured to communicate with said mobile unit by means of radiofrequency signals generated in accordance with one of the Bluetooth standard protocols, said system comprising means for carrying out the steps of a method as described above.

According to specific embodiments of the invention, the system may comprise at least one computer and a data storage medium, in which at least one program for carrying out steps of the method carried out by the system is stored.

Another object of the invention concerns a computer program comprising instructions for carrying out the steps of a method as described above.

Another object of the invention concerns a medium which can be used in a computer and on which a program as described above is recorded.

### Brief description of the drawings

Practicable embodiments of the invention are described in further detail below by way of example only with reference to the accompanying drawings, which show:
- figure 1, a schematic view illustrating the main components of a system according to the invention; and
- figure 2, a block diagram showing some steps of a method according to the invention.

### Detailed description of the invention

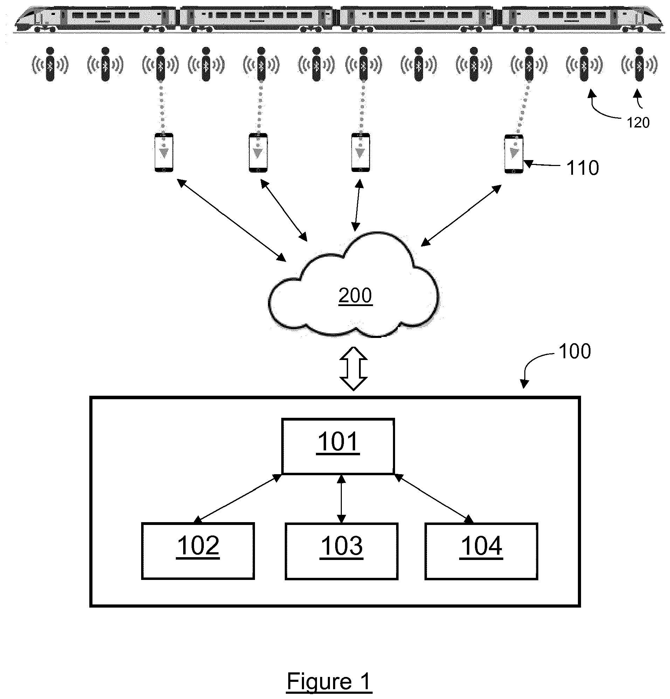

As illustrated in Figure 1, the system 100 for determining the location of a mobile unit 110 located in a train carriage according to the invention comprises an information processing unit 101, comprising one or more processors, a data storage medium 102, input and output means 103 and, optionally, display means 104. According to some embodiments, the system 100 comprises one or more computers, one or more servers, one or more supercomputers and/or any combination comprising one of these computer systems. Preferably, the information processing unit 101 consists of a computer or a server provided with one or more communication interfaces and one or more pieces of software specifically designed and configured for carrying out the tasks and the steps described below.

For some tasks, the system 100 interacts, via a communication channel 200 that preferably includes a mobile communication network (e.g. GSM, 3G, 4G, 5G), with mobile units 110, for instance smartphones, located in a train. The system 100 is thus able to send data to the mobile units 110 and to receive data from them. This is particularly advantageous because some additional elements of the system 100 (not represented) consist of components that perform certain steps of the method according to the invention and that are stored and executed by the mobile units 110 themselves. Those additional elements are preferably bundled in an application that is hosted in each mobile unit 110 and executed by the mobile unit 110, either punctually or continuously. Accordingly, when performing certain steps in accordance with these additional elements, the mobile units 110 interact with one or more beacons 120 arranged in the train carriages by means of radiofrequency signals generated according to one of the Bluetooth standard protocols. Likewise, all beacons 120 are also compatible with the Bluetooth technology, that is they are all adapted for generating radiofrequency signals in accordance with one of the Bluetooth standard protocols.

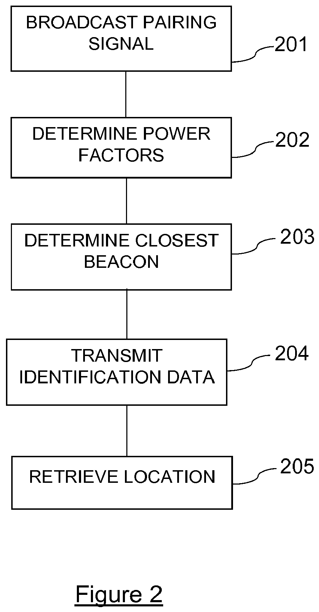

All the elements described above contribute to enable the system 100 to implement the method for determining the location of a mobile unit 110 located in a train carriage, as described below in relation to figure 2.

In a step 201, the mobile unit 110 broadcasts a pairing signal. The pairing signal is configured by the mobile unit 110 so that, upon receipt by a beacon 120, it triggers transmission by the beacon 120 of an authentication signal that contains identification data. Conveniently, each beacon 120 stores its own unique identification data and it transmits an authentication signal that includes its own identification data, or at least part of it, whenever it receives a pairing signal transmitted by the mobile unit 110.

In a step 202, the mobile unit 110 determines a first power factor of a first signal transmitted by a first beacon 120 and a second power factor of a second signal transmitted by a second beacon 120. To this end, when a signal transmitted by a beacon 120 is received, the mobile unit 110 proceeds by performing measurements of the power present in the received signal. Based on these measurements, the mobile unit 110 determines a received signal strength indicator (RSSI), which is stored as a power factor in relation to the received signal. Likewise, when several beacons 120 are near the mobile unit 110, each one transmits independently an authentication signal when a pairing signal transmitted by the mobile unit 110 is received. Accordingly, the mobile unit 110 analyzes all authentication signals that are received in order to determine power factors for all beacons around.

In a step 203, the mobile unit 110 analyzes the power factors that have been determined in order to determine a closest beacon. To this end, the mobile unit 110 browses all power factors that have been previously determined and it selects the highest power factor. Then, the mobile unit 110 retrieves the identification data of the beacon 120 that corresponds to the highest power factor. However, alternatively or cumulatively, the mobile unit 110 may select, instead of only the highest power factor, a set of power factors, for instance those that are beyond a certain predefined threshold. In this case, the mobile unit 110 will also retrieve identification data of several close beacons 120 that correspond to the power factors contained in the selected set.

In a step 204, the mobile unit 110 transmits, via the communication channel 200, the identification data previously determined to the system 100. Thus, the identification data transmitted by the mobile unit 110 preferably relates to the beacon 120 which corresponds to the highest power factor. Alternatively, or cumulatively, the identification data relates to a set of several close beacons 120.

In a step 205, the system 100 retrieves location data that corresponds to said identification data of said closest beacon. To this end, the system 100 conveniently stores in the data storage medium 102 a listing of all beacons, each one identified by its own identification data in relation to its location. Advantageously, for each beacon, the listing defines a location as a specific spot within a specific carriage of a specific train. Thus, the system 100 browses the listing of beacons to determine the beacon 120 that corresponds to the identification data that has been received. Then, the system 100 retrieves the location of the closest beacon, or, respectively, of a set of close beacons. Accordingly, the system 100 determines the location of the mobile unit 110 in the train.

In a particular embodiment, the system 100 performs an additional step during which it selects useful information on the basis of the location of the mobile unit 110. Ultimately, useful data selected by the system 100 is transmitted to the mobile unit 110 via the communication channel 200.

Thus, according to the system and the method according to the present invention described above, the functional bricks are made available for providing functionalities allowing locations of passengers in a train carriage to be precisely determined without using any camera.

## Claims

1. A method for determining by a computer system the location of a mobile unit (110) located in a train carriage, said train carriage being provided with at least one first beacon (120) and at least one second beacon (120), both beacons being configured to communicate with said mobile unit by means of radiofrequency signals generated in accordance with one of the Bluetooth standard protocols, **characterized in that** the method comprises the steps of:
- broadcasting, by said mobile unit, a pairing signal configured to trigger, upon receipt by said first and/or said second beacon, transmitting by said first and/or second beacon of an authentication signal that includes identification data of said first and/or, respectively, said second beacon,
- determining, by said mobile unit, a first power factor of a first signal transmitted by said first beacon and a second power factor of a second signal transmitted by said second beacon,
- analyzing, by said mobile unit, said first power factor and said second power factor in order to determine a closest beacon,
- transmitting, by said mobile unit, a third signal that includes identification data of said closest beacon, and
- retrieving, by a computer (101) which is remote from said mobile unit, location data that corresponds to said identification data of said closest beacon.

2. The method according to claim 1, **characterized in that** said step of analyzing said first power factor and said second power factor includes a step of determining the highest power factor.

3. The method according to one of the preceding claims, **characterized in that** it includes a step of transmitting, by said mobile unit, to said computer, a fourth signal that includes identification data of a close beacon.

4. The method according to one of the preceding claims, **characterized in that** it includes a step of receiving, by said mobile unit, a fifth signal that includes useful data selected by said computer.

5. A system (100) for determining the location of a mobile unit located in a train carriage, said train carriage being provided with at least one first beacon (120) and at least one second beacon (120), both beacons being configured to communicate with said mobile unit by means of radiofrequency signals generated in accordance with one of the Bluetooth standard protocols, **characterized in that** it comprises means (101, 102, 103, 104) for carrying out the steps of a method according to one of the preceding claims.

6. System according to claim 5, **characterized in that** it comprises at least one computer (101) and a data storage medium (102), in which at least one program for carrying out steps of the method carried out by the system is stored.

7. Computer program comprising instructions for carrying out the steps of a method according to claims 1 to 4.

8. Medium which can be used in a computer and on which a program according to claim 7 is recorded.
